# EUROPÄISCHE PATENTSCHRIFT

(11) **EP 3 380 343 B1**
(45) Veröffentlichungstag und Bekanntmachung des Hinweises auf die Patenterteilung: **08.07.2020**
(21) Anmeldenummer: 16757201.5
(22) Anmeldetag: 18.08.2016
(51) Int. Cl.: B60C 19/08

(54) **FAHRZEUGLUFTREIFEN**
PNEUMATIC VEHICLE TIRE
PNEU DE VÉHICULE

(30) Priorität: 26.11.2015 DE 102015223393
(43) Veröffentlichungstag der Anmeldung: 03.10.2018
(73) Patentinhaber: Continental Reifen Deutschland GmbH, 30165 Hannover (DE)
(72) Erfinder: KENDZIORRA, Norbert, 30827 Garbsen (DE); WEBER, Christian, 30826 Garbsen (DE)
(74) Vertreter: Finger, Karsten
(86) Internationale Anmeldenummer: PCT/EP2016/069550
(87) Internationale Veröffentlichungsnummer: WO 2017/088994

(56) Entgegenhaltungen:
- EP-A2- 1 526 005
- WO-A1-2015/098972
- DE-A1-102010 017 443
- DE-A1-102010 017 444
- JP-A- 2009 154 608

## Beschreibung

Die Erfindung betrifft einen Fahrzeugluftreifen in Radialbauart mit einem eine Laufstreifencap und eine Laufstreifenbase aufweisenden Laufstreifen, einer Karkasseinlage, elektrisch nicht leitfähigen Seitenwänden und zumindest einem elektrisch leitfähigen Bauteil oder Element in einem Wulstbereich, welcher bzw. welches bei auf einer Felge montiertem Reifen mit dieser in Kontakt tritt, wobei die Laufstreifenbase elektrisch leitfähig ist und mit zumindest einem die Laufstreifencap durchsetzenden Carbon Center Beam in Kontakt steht, wodurch die Laufstreifenbase mit der Laufstreifenaußenfläche in elektrisch leitfähiger Verbindung steht,
wobei zumindest in einem Seitenwandbereich mit elektrisch leitfähiger Beschichtung versehene Fäden eingebracht sind, deren Beschichtung elektrisch leitfähige Passagen zwischen der Laufstreifenbase und dem zumindest einen elektrisch leitfähigen Bauteil oder Element im Wulstbereich bilden,
wobei ein elektrisch leitfähiger Bauteil, eine elektrisch leitfähige Verbindung und eine elektrisch leitfähige Beschichtung ein solcher bzw. eine solche ist, welcher bzw. welche einen elektrischen Wiederstand < 1 x 10⁸ Ohm aufweist,
wobei die Fäden derart auf der Innenseite der Seitenwand und dem zumindest einen elektrisch leitfähigen Bauteil oder Element im Wulstbereich aufgebracht sind, dass die elektrisch leitfähige Beschichtung der Fäden sowohl im Bereich der Grenzfläche zwischen der Seitenwand und dem zumindest einen elektrisch leitfähigen Bauteil oder Element im Wulstbereich als auch im Bereich der Grenzfläche zwischen der Seitenwand und der mit der Laufstreifenaußenfläche in elektrisch leitfähiger Verbindung stehende Laufstreifenbase einvulkanisierte elektrisch leitfähige Passagen bilden.

Es ist bekannt, Reifenbauteile, insbesondere den Laufstreifen und die Seitenwände, aus mit Silica (Kieselsäure) gefüllten Kautschukmischungen zu fertigen um den Rollwiderstand zu reduzieren. Silica enthaltende Kautschukmischungen verleihen den daraus gefertigten Gummibauteilen jedoch einen derart hohen elektrischen Widerstand, dass diese elektrisch nicht mehr leitfähig sind, sodass entsprechende Maßnahmen zur Ableitung der beim Fahren auftretenden elektrostatischen Aufladungen getroffen werden müssen. Die elektrische Leitfähigkeit ist auch bei Reifenbauteilen aus solchen Kautschukmischungen zu gering, welche Ruß in sehr geringen Mengen und/oder Ruß mit einer geringen Aktivität/kleinem BET enthalten.

Ein Reifen der eingangs genannten Art ist beispielsweise aus der JP 2009 154 608 A bekannt. Dieser weist in einem Seitenwandbereich zumindest einen zwischen der Seitenwand und der Karkasseinlage verlaufenden elektrisch leitfähigen Streifen auf, wobei sich das eine Ende des Streifens zwischen der Karkasseinlage und einem Schulterpolster und das andere Ende des Streifens zwischen der Karkasseinlage und dem Hornprofil befindet. Der Streifen kann einen elektrisch leitfähigen Faden enthalten, wobei die Breite und die Dicke des Streifens im Wesentlichen mit den entsprechenden Dimensionen des Fadens übereinstimmen.

Ferner ist aus der DE 10 2010 017 444 A1 ein Reifen bekannt, welcher eine Karkasseinlage aufweist, auf deren einen Seite elektrisch leitfähig beschichtete Fäden aus Baumwolle oder PET angeordnet sind. Die Fäden sollen vor allem die während des Reifenbaus zwischen der Karkasseinlage und den angrenzenden Reifenbauteilen (Innenschicht und/oder Seitenwand) eingeschlossene Luft abführen.

Die WO 2015/098972 A1 offenbart einen Fahrzeugluftreifen, welcher im Bereich einer Seitenwand einen elektrisch leitfähigen Faden, beispielsweise einen Kord, aufweist. Gemäß einer Variante verläuft der Faden zwischen der Karkasseinlage und der Innenschicht und kontaktiert mit einem Endabschnitt den Karkasshochschlag. Bei einer weiteren Variante verläuft der Faden in Kontakt mit dem Wulstkern, dem Apex, der Karkasseinlage und der Seitenwand, wobei der Faden mit einem Abschnitt zwischen die radial innerste Gürtellage und die Karkasseinlage hineinverläuft.

Die EP 1 526 005 A2 offenbart einen weiteren Fahrzeugluftreifen, in dessen einem Seitenwandbereich ein zwischen der Seitenwand und der Karkasseinlage verlaufender elektrisch leitfähiger Kord vorgesehen ist, welcher über die Seitenwand verläuft und das Hornprofil und die radial innerste Gürtellage kontaktiert.

Aus der DE 10 2010 037 004 A1 ist ein Fahrzeugluftreifen bekannt, dessen Seitenwände aus einem elektrisch nicht leitfähigen Gummimaterial bestehen. Die Seitenwände sind von einem faden-, strang- oder bandartigen elektrisch leitfähigen Element spiralig umwickelt Das elektrisch leitfähige Element ist ein metallisches Filament, ein aus solchen Elementen zusammengesetzter Kord oder ein aus einer elektrisch leitfähigen Kautschukmischung gefertigtes Band.

Ein Fahrzeugluftreifen mit einer Karkasseinlage, an welcher eine aus einer elektrisch leitfähigen Kautschukmischung gefertigte Auflage anliegt, ist aus der DE 10 2013 104 114 A1 bekannt. Die Auflage erstreckt sich vom elektrisch leitfähigen Hornprofil bis zum Oberbau des Reifens.

Der Erfindung liegt die Aufgabe zugrunde, bei einem Reifen der eingangs genannten Art die Ableitung elektrostatischer Aufladungen über die Seitenwände, welche zweckmässigerweise die "Hauptleitpfade" enthalten, mit möglichst einfachen und einfach herzustellenden Maßnahmen zu ermöglichen.

Die gestellte Aufgabe wird erfindungsgemäß dadurch gelöst, dass die Laufstreifenbase von den Seitenwänden außenseitig überlappt ist.

Erfindungsgemäß ausgeführte Reifen weisen daher durch die Beschichtung von Fäden in ihren Seitenwandbereichen gebildete, einvulkanisierte und daher dauerhaltbare elektrisch leitfähige Passagen auf. Die beschichteten Fäden können auf einfache Weise an den betreffenden noch unvulkanisierten, "rohen" Bauteilen angebracht werden. Diese Maßnahme lässt gut in bestehende Reifenfertigungsprozesse integrieren.

Bei einer bevorzugten Ausführungsform der Erfindung stammen die elektrisch leitfähigen Passagen von der elektrisch leitfähigen Beschichtung von Fäden, welche jeweils durchgehend über die Innenseite der Seitenwand und in Kontakt mit dem zumindest einen elektrisch leitfähigen Bauteil oder einem Element im Wulstbereich stehend aufgebracht worden sind. Das Aufbringen der eine elektrisch leitfähige Beschichtung aufweisenden Fäden auf der Innenseite der Seitenwand lässt sich besonders einfach in den üblichen Reifenherstellungsprozess integrieren.

Bei einer alternativen Ausführungsform der Erfindung, die ebenfalls eine einfache Herstellung der elektrisch leitfähigen Passagen ermöglicht, stammen die elektrisch leitfähigen Passagen von der Beschichtung von Fäden, welche am radial äußeren Endabschnitt der Seitenwand, am radial inneren Abschnitt der Seitenwand sowie in Kontakt mit dem zumindest einen elektrisch leitfähigen Bauteil oder Element im Wulstbereich, ferner im Bereich zwischen dem radial äußeren Endabschnitt der Seitenwand und dem radial inneren Endabschnitt der Seitenwand auf der Karkasseinlage aufgebracht worden sind.

Der elektrisch leitfähige Bauteil im Wulstbereich kann vorzugsweise ein im Wulstbereich vorhandener Gummibauteil, insbesondere das im Wulstbereich mit der Felge in Kontakt stehende Hornprofil, welches üblicherweise aus einer elektrisch leitfähigen Gummimischung besteht, sein.

Die elektrisch leitfähigen Passagen im Fahrzeugluftreifen können nach einem weiteren Merkmal der Erfindung zumindest im Wesentlichen in radialer Richtung verlaufen oder auch unter einem Winkel, welcher insbesondere bis zu 60° beträgt, zur radialen Richtung verlaufen. Die Anzahl der bei einem erfindungsgemäß ausgeführten Reifen vorgesehenen elektrisch leitfähigen Passagen kann relativ geringgehalten werden. Bevorzugt ist eine Ausführungsvariante, bei der die elektrisch leitfähigen Passagen unter gegenseitigen Abständen von 5 cm bis 15 cm verlaufen.

Auf besonders einfache Weise lassen sich solche elektrisch leitfähigen Passagen erstellen, welche entweder von der Beschichtung von Fäden eines Gewebes stammen oder von der Beschichtung von Fäden stammen, die in Wirrlage mit gegenseitigem Kontakt aufgebracht worden sind.

Es eignen sich im Rahmen der Erfindung Fäden mit unterschiedlicher elektrisch leitfähiger Beschichtung. Bevorzugt sind Fäden, deren elektrisch leitfähige Beschichtung elektrisch leitende Partikel, beispielsweise Rußpartikel, Graphitpartikel oder Kohlenstoffnanoröhren, enthält oder deren elektrisch leitfähige Beschichtung aus solchen Partikeln besteht. Die elektrisch leitfähige Beschichtung kann ferner aus einem elastomeren Material, beispielsweise einem Haftvermittler, vorzugsweise einem RFL-Dip, bestehen.

Die Fäden weisen darüber hinaus elektrisch nicht leitfähige Trägerfäden auf, die entsprechend beschichtet sind und welche insbesondere aus Rayon, Polyester, Polyamid oder Aramid bestehen.

Weitere Merkmale, Vorteile und Einzelheiten der Erfindung werden nun anhand der Zeichnung, die schematisch Ausführungsbeispiele der Erfindung darstellt, näher beschrieben. Dabei zeigen

Fig. 1 einen Querschnitt durch eine Hälfte eines Fahrzeugluftreifens mit einer Ausführungsform der Erfindung und

Fig. 2 bis Fig. 6 je eine Ansicht auf einen Abschnitt eines koextrudierten Seitenwand/Hornprofiles mit unterschiedlichen Ausführungsformen der Erfindung-Erfindungsgemäß ausgeführte Fahrzeugluftreifen können Reifen für PKW, Vans, Light-Trucks oder Nutzfahrzeuge sein.

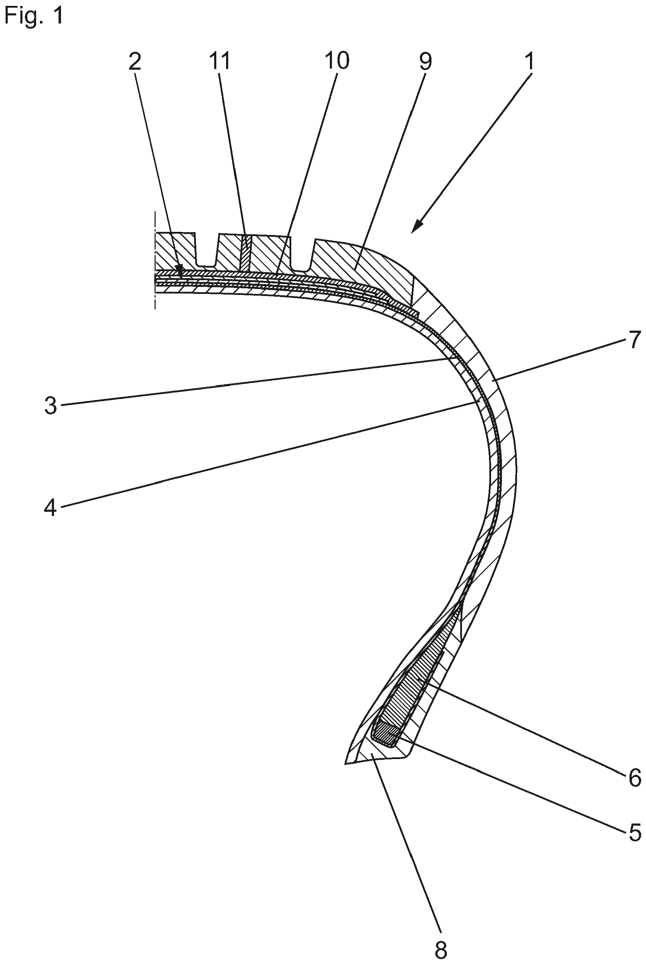

In Fig. 1 sind von den üblichen Bauteilen eines PKW-Fahrzeugluftreifens in Radialbauart ein Laufstreifen 1, ein radial innerhalb des Laufstreifens 1 angeordneter mehrlagiger Gürtelverband 2, eine mit Festigkeitsträgern verstärkte Karkasseinlage 3, eine luftdichte Innenschicht 4, ein Wulstkern 5, ein auf dem Wulstkern 5 sitzendes Kernprofil 6, eine Seitenwand 7 sowie ein Hornprofil 8 dargestellt. Die zweite, in Fig. 1 nicht gezeigte Hälfte des Fahrzeugluftreifens ist vorzugsweise übereinstimmend zu jener in Fig. 1 ausgeführt.

Der Laufstreifen 1 ist in radialer Richtung zweischichtig aufgebaut und setzt sich aus einer die Profilierung enthaltenden Laufstreifencap 9 und einer radial innerhalb der Laufstreifencap 9 verlaufenden Laufstreifenbase 10 zusammen, wobei sich die Laufstreifenbase 10 in axialer Richtung über die gesamte Breite der Laufstreifencap 9 erstreckt.

Die Laufstreifenbase 10 ist aus zumindest einer einen derartigen Anteil an Ruß als Füllstoff enthaltenden Kautschukmischung gefertigt, dass sie elektrisch leitfähig ist und daher aus einem elektrisch leitfähigen Gummimaterial besteht, welches einen elektrischen Widerstand < 1 x 10⁸ Ohm aufweist. Die Laufstreifencap 9 ist aus zumindest einer als Füllstoff Silica (fein verteilte Kieselsäure) enthaltenden Kautschukmischung hergestellt und besteht dementsprechend aus elektrisch nicht leitfähigem Gummimaterial.

Zwischen der Laufstreifenbase 10 und der Laufstreifenaußenfläche ist eine elektrisch leitfähige Verbindung sichergestellt, wobei vorzugsweise, wie beim gezeigten Ausführungsbeispiel, in der Laufstreifencap 9 ein in Umfangsrichtung umlaufender elektrisch leitfähiger Gummistreifen 11, ein sogenannter Carbon Center Beam, enthalten ist, welcher sich im Wesentlichen in radialer Richtung sowie bis zur Laufstreifenaußenfläche erstreckt und aus der Kautschukmischung der Laufstreifenbase 10 gefertigt sein kann.

Der radial innerhalb des Laufstreifens 1 befindliche Gürtelverband 2 weist zwei Gürtellagen auf, welche eine elektrisch nicht leitende, beispielsweise als Füllstoff Silica enthaltende Gürtelgummierung besitzen. Eine etwaige vorgesehene Gürtelbandage, welche vorzugsweise herkömmlich ausgeführt ist, weist ebenfalls eine elektrisch nicht leitfähige Gummierung auf.

Die Karkasseinlage 3 verläuft radial innerhalb des Gürtelverbandes 2 und entlang der Seitenwände 7 in die Wulstbereiche und ist dort um den jeweiligen Wulstkern 5, einen Karkasshochschlag bildend, umgeschlagen. Auch die Gummierung der Karkasseinlage 3 ist elektrisch nicht leitfähig.

Die Seitenwände 7 erstrecken sich jeweils vom Laufstreifen 1 bis zum jeweiligen Hornprofil 8. Der radial äußere Endabschnitt jeder Seitenwand 7 überlappt und kontaktiert von außen die Laufstreifenbase 10 und die Laufstreifencap 9. Der radial innere Endabschnitt jeder Seitenwand 7 überlappt außenseitig das Hornprofil 8. Jede Seitenwand 7 ist aus einer elektrisch nicht leitfähigen, beispielsweise einen entsprechenden Anteil an Silica (Kieselsäure) als Füllstoff enthaltenden Kautschukmischung gefertigt. Die Hornprofile 8 bestehen aus elektrisch leitfähigem Gummimaterial. Bei der gezeigten und noch näher beschriebenen Ausführungsform sind daher beispielhaft die Hornprofile 8 jene elektrisch leitfähigen Bauteile oder Elemente in den Wulstbereichen, welche bei auf einer Felge montiertem Reifen mit dieser in Kontakt treten. Es können auch andere Elemente, Bauteile oder Einbauteile in den Wulstbereichen vorgesehen sein, die ein elektrisch leitende Verbindung der Seitenwände mit der Felge herstellen können und im Rahmen der Erfindung für diesen Zweck verwendet werden können.

Gemäß der Erfindung ausgeführte Fahrzeugluftreifen weisen daher eine Anzahl von Bauteilen auf, die elektrisch nicht leitfähig sind und vorzugsweise im Gummimaterial Silica enthalten. Wie an sich bekannt ist diese Maßnahme für den Rollwiderstand des Reifens sowie für die Schnitt- und Rissbeständigkeit des jeweiligen Reifenbauteiles von Vorteil. Um eine Ableitung elektrostatischer Aufladungen von den in den Wulstbereichen mit der metallischen Felge in Kontakt stehenden elektrisch leitfähigen Elemente, Bauteile oder Einbauteile zur elektrisch leitfähigen Laufstreifenbase 10 sicherzustellen, sind bei Reifen gemäß der Erfindung zumindest in einem der Seitenwandbereiche elektrisch leitfähige Passagen vorgesehen.

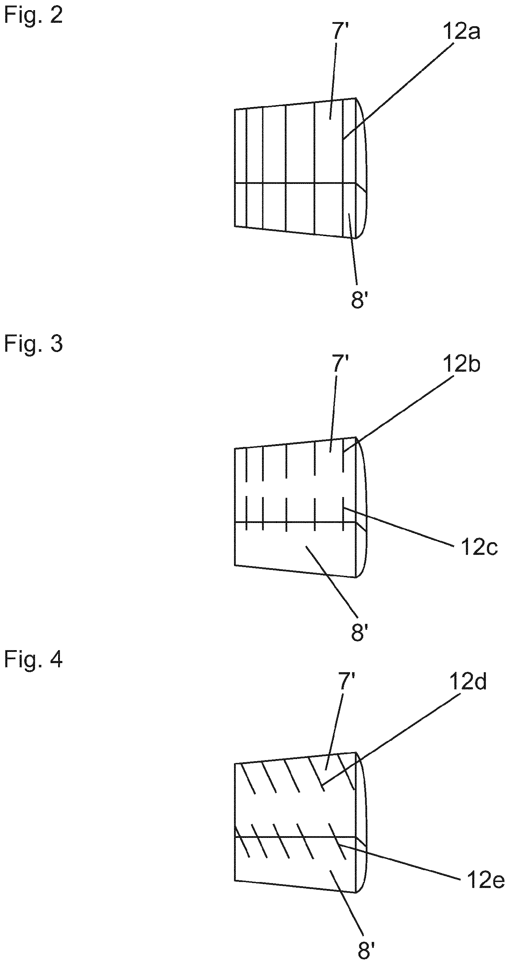

Fig. 2 bis Fig. 6 zeigen jeweils eine Ansicht auf die im fertigen Reifen die Innenseite bildende Seite eines Umfangsabschnittes eines koextrudierten Seitenwand/Hornprofiles, wobei das unvulkanisierte Seitenwandprofil jeweils mit 7' und das unvulkansierte Hornprofil jeweils mit 8' bezeichnet sind. Gemäß der Erfindung werden auf der Innenseite des Seitenwand/Hornprofiles Fäden 12a bis 12i angebracht, welche elektrisch leitfähig beschichtet sind, sodass die Beschichtungen im fertigen, vulkanisierten Reifen elektrisch leitfähige Passagen bzw. Verbindungen bilden.

Die elektrisch leitfähigen Fäden 12a bis 12i bestehen bei einer bevorzugten Ausführungsvariante aus einem Trägerfaden aus einem elektrisch nicht leitfähigen Material, welcher eine äußere Beschichtung bzw. Ummantelung aus einem elektrisch leitenden Material aufweist. Die Trägerfäden können beispielsweise aus Rayon, Polyester, Polyamid oder Aramid bestehen und ein Monofilament, ein Garn oder ein aus mehreren Garnen bestehender Kord sein. Die elektrisch leitende Beschichtung basiert beispielsweise auf einer Latex oder ein anderes Elastomer enthaltenden Suspension, in welcher elektrisch leitfähige Partikel, etwa Rußpartikel oder Graphitpulver, enthalten sind, wodurch die elektrische Leitfähigkeit der Beschichtung gewährleistet ist. Zur Herstellung dieser Beschichtung kann beispielsweise ein Rußpartikel enthaltender herkömmlicher Haftvermittler verwendet werden, der so weit flüssig ist, dass der aus textilem Material bestehende Trägerfaden mittels eines Dip-Vorganges beschichtet werden kann. Verwendet werden kann beispielsweise ein RFL-Dip (Resorcin-Formaldehyd-Latex-Dip), in welchem Rußpartikel, insbesondere N 339-Partikel oder N 121-Partikel eingemischt sind. Der Anteil an elektrisch leitfähigen Partikeln in der Suspension beträgt beispielsweise 10 Gew.-% bis 70 Gew.-%, insbesondere 30 Gew.-% bis 50 Gew.-%. Die elektrisch leitende Beschichtung der Trägerfäden kann auch ausschließlich aus elektrisch leitenden Partikeln, beispielsweise Rußpartikel, Garphitpulver oder Kohlenstoffnanoröhren, bestehen
Die Innenseite des in Fig. 2 gezeigten Seitenwand/Hornprofiles wird mit durchgehenden, d.h. jeweils über das Seitenwandprofil 7' und das Hornprofil 8' im Wesentlichen gerade und im Wesentlichen parallel zueinander verlaufenden elektrisch leitfähigen Fäden 12a belegt. Die Fäden 12a wiesen voneinander einen Abstand von vorzugsweise 5 cm bis 15 cm auf.

Die Innenseite des in Fig. 3 gezeigten Seitenwand/Hornprofiles ist mit einer radial äußeren Fadenschar und einer radial inneren Fadenschar belegt, welche jeweils aus im Wesentlichen gerade und im Wesentlichen parallel zueinander verlaufenden, kurzen elektrisch leitfähigen Fäden 12b, 12c bestehen. Die Fäden 12b der radial äußeren Fadenschar sind am radial äußeren Endabschnitt des Seitenwandprofiles 7' angebracht, die Fäden 12c der radial inneren Fadenschar sind derart angebracht, dass sie zum Teil am radial inneren Endabschnitt des Seitenwandprofiles 7' und zum Teil am radial äußeren Bereich des Hornprofiles 8' verlaufen. Der gegenseitige Abstand der Fäden beträgt vorzugsweise 5 cm bis 15 cm. Die Karkasseinlage 3 ist zumindest in jenem Bereich, welcher der Lücke zwischen Fäden 12b, 12c der beiden Fadenscharen gegenüberliegt, ebenfalls mit elektrisch leitfähige Fäden belegt, sodass durch den gegenseitigen Kontakt der Beschichtungen von der Felge bis zur Laufstreifenbase durchgehende elektrisch leitfähige Passagen geschaffen werden.

Das in Fig. 4 gezeigte Seitenwand/Hornprofil unterscheidet sich von jenem gemäß Fig. 3 dadurch, dass die elektrisch leitfähigen Fäden 12d, 12e unter einem Winkel von bis zu 60°, vorzugsweise von mindestens 20°, zur radialen Richtung verlaufend aufgebracht werden.

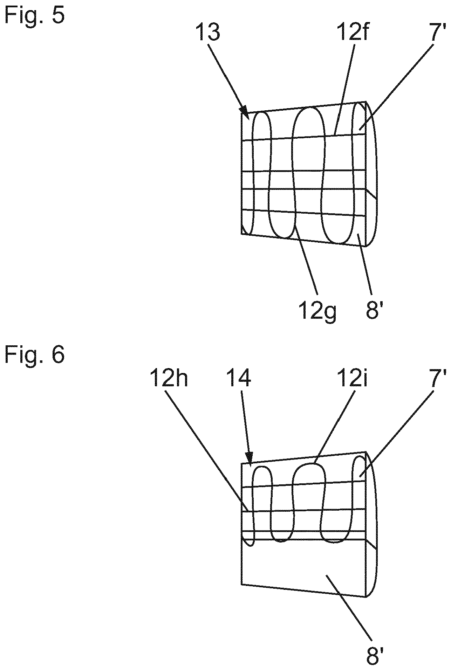

Die Innenseite des in Fig. 5 gezeigten Seitenwand/Hornprofiles ist mit einem Gewebe 13 aus elektrisch leitfähigen Schussfäden 12f und elektrisch leitfähigen Kettfaden 12g belegt. Beim gezeigten Ausführungsbeispiel ist die Breite des Gewebes 13 auf die Abmessungen des Seitenwand/Hornprofiles abgestimmt, sodass der Kettfaden 12g im Wesentlichen in radialer Richtung sowie wellenförmig über das Seitenwandprofil 7' und das Hornprofil 8' verläuft.

Die Innenseite des in Fig. 6 gezeigten Seitenwand/Hornprofiles ist mit einem schmalen Gewebe 14 aus elektrisch leitfähigen Schussfäden 12h und elektrisch leitfähigen Kettfaden 12i belegt. Beim gezeigten Ausführungsbeispiel ragt der Kettfaden 12i nur ein kleines Stück in das Hornprofil 8' hinein.

Bei weiteren Ausführungsvarianten werden aus einem solchen Gewebe auf entsprechende Größe zugeschnittene Gewebestücke verwendet.

Bei einer weiteren Ausführungsvariante werden relativ kurze elektrisch leitfähige Fäden in einer Wirrlage, d.h. zufällig und orientierungslos, und mit gegenseitigen Kontaktstellen angebracht.

### Bezugsziffernliste

- 1 ......................: Laufstreifen
- 2 ......................: Gürtelverband
- 3 ......................: Karkasseinlage
- 4 ......................: Innenschicht
- 5 ......................: Wulsterkern
- 6 ......................: Kernprofil
- 7 ......................: Seitenwand
- 7' .....................: Seitenwandprofil
- 8 ......................: Hornprofil
- 8' .....................: unvulkanisiertes Hornprofil
- 9 ......................: Laufstreifencap
- 10 ....................: Laufstreifenbase
- 11 ....................: Gummistreifen
- 12a bis 12i .......: Faden
- 13, 14 ..............: Gewebe

## Patentansprüche

1. Fahrzeugluftreifen in Radialbauart mit einem eine Laufstreifencap (9) und eine Laufstreifenbase (10) aufweisenden Laufstreifen (1), einer Karkasseinlage (3), elektrisch nicht leitfähigen Seitenwänden (7) und zumindest einem elektrisch leitfähigen Bauteil (8) oder Element in einem Wulstbereich, welcher bzw. welches bei auf einer Felge montiertem Reifen mit dieser in Kontakt tritt, wobei die Laufstreifenbase (10) elektrisch leitfähig ist und mit zumindest einem die Laufstreifencap (9) durchsetzenden Carbon Center Beam (11) in Kontakt steht, wodurch die Laufstreifenbase (10) mit der Laufstreifenaußenfläche in elektrisch leitfähiger Verbindung steht,
wobei zumindest in einem Seitenwandbereich mit elektrisch leitfähiger Beschichtung versehene Fäden (12a - 12i) eingebracht sind, deren Beschichtung elektrisch leitfähige Passagen zwischen der Laufstreifenbase (10) und dem zumindest einen elektrisch leitfähigen Bauteil (8) oder Element im Wulstbereich bilden,
wobei ein elektrisch leitfähiger Bauteil, eine elektrisch leitfähige Verbindung und eine elektrisch leitfähige Beschichtung ein solcher bzw. eine solche ist, welcher bzw. welche einen elektrischen Wiederstand < 1 x 10⁸ Ohm aufweist,
wobei die Fäden (12a - 12i) derart auf der Innenseite der Seitenwand (7) und dem zumindest einen elektrisch leitfähigen Bauteil (8) oder Element im Wulstbereich aufgebracht sind, dass die elektrisch leitfähige Beschichtung der Fäden (12a - 12i) sowohl im Bereich der Grenzfläche zwischen der Seitenwand (7) und dem zumindest einen elektrisch leitfähigen Bauteil (8) oder Element im Wulstbereich als auch im Bereich der Grenzfläche zwischen der Seitenwand (7) und der mit der Laufstreifenaußenfläche in elektrisch leitfähiger Verbindung stehende Laufstreifenbase (10) einvulkanisierte elektrisch leitfähige Passagen bilden, **dadurch gekennzeichnet,**
**dass** die Laufstreifenbase (10) von den Seitenwänden (7) außenseitig überlappt ist.

2. Fahrzeugluftreifen nach Anspruch 1, **dadurch gekennzeichnet, dass** die elektrisch leitfähigen Passagen von der elektrisch leitfähigen Beschichtung von Fäden (12a), welche jeweils durchgehend über die Innenseite der Seitenwand (7') und in Kontakt mit dem zumindest einen elektrisch leitfähigen Bauteil (8) oder Element im Wulstbereich stehend aufgebracht worden sind, stammen.

3. Fahrzeugluftreifen nach Anspruch 1, **dadurch gekennzeichnet, dass** die elektrisch leitfähigen Passagen von der Beschichtung von Fäden, welche am radial äußeren Endabschnitt der Seitenwand (7'), am radial inneren Endabschnitt der Seitenwand sowie in Kontakt mit dem zumindest einen elektrisch leitfähigen Bauteil (8) oder Element im Wulstbereich und im Bereich zwischen dem radial äußeren Endabschnitt der Seitenwand (7') und dem radial inneren Endabschnitt der Seitenwand auf der Karkasseinlage (3) aufgebracht worden sind, stammen.

4. Fahrzeugluftreifen nach einem der Ansprüche 1 bis 3, **dadurch gekennzeichnet, dass** elektrisch leitfähigen Bauteil (8) im Wulstbereich ein Gummibauteil, insbesondere ein Hornprofil ist.

5. Fahrzeugluftreifen nach einem der Ansprüche 1 bis 4, **dadurch gekennzeichnet, dass** die elektrisch leitfähigen Passagen zumindest im Wesentlichen in radialer Richtung verlaufen.

6. Fahrzeugluftreifen nach einem der Ansprüche 1 bis 4, **dadurch gekennzeichnet, dass** die elektrisch leitfähigen Passagen unter einem Winkel zur radialen Richtung, welcher bis zu 60° beträgt, verlaufen.

7. Fahrzeugluftreifen nach einem der Ansprüche 1 bis 6, **dadurch gekennzeichnet, dass** die elektrisch leitfähigen Passagen unter gegenseitigen Abständen von 5 cm bis 15 cm verlaufen.

8. Fahrzeugluftreifen nach einem der Ansprüche 1 bis 7, **dadurch gekennzeichnet, dass** die elektrisch leitfähigen Passagen von der Beschichtung von Fäden eines Gewebes (13, 14) stammen.

9. Fahrzeugluftreifen nach einem der Ansprüche 1 bis 7, **dadurch gekennzeichnet, dass** die elektrisch leitfähigen Passagen von der Beschichtung von Fäden stammen, die in Wirrlage mit gegenseitigem Kontakt aufgebracht worden sind.

10. Fahrzeugluftreifen nach einem der Ansprüche 1 bis 9, **dadurch gekennzeichnet, dass** die elektrisch leitfähige Beschichtung der Fäden elektrisch leitende Partikel, beispielsweise Rußpartikel, Graphitpartikel oder Kohlenstoffnanoröhren, enthält oder aus solchen Partikeln besteht.

11. Fahrzeugluftreifen nach einem der Ansprüche 1 bis 10, **dadurch gekennzeichnet, dass** die elektrisch leitfähige Beschichtung der Fäden aus einem elastomerhaltigen Material besteht.

12. Fahrzeugluftreifen nach Anspruch 11, **dadurch gekennzeichnet, dass** die Beschichtung ein Haftvermittler, vorzugsweise ein RFL-Dip, ist.

13. Fahrzeugluftreifen nach einem der Ansprüche 1 bis 12, **dadurch gekennzeichnet, dass** die Fäden elektrisch nicht leitfähige Trägerfäden aufweisen, welche insbesondere aus Rayon, Polyester, Polyamid oder Aramid bestehen.

## Claims

1. Pneumatic vehicle tyre in radial design having a tread (1) having a tread cap (9) and a tread base (10), a carcass insert (3), electrically nonconductive sidewalls (7) and at least one electrically conductive component (8) or element in a bead region which comes into contact with the wheel rim when the tyre is mounted thereon, wherein the tread base (10) is electrically conductive and is in contact with at least one carbon centre beam (11) that permeates the tread cap (9), as a result of which the tread base (10) is in electrically conductive connection with the outer surface of the tread,
wherein filaments (12a-12i) provided with electrically conductive coating have been introduced at least in one sidewall region, the coating of which forms electrically conductive passages between the tread base (10) and the at least one electrically conductive component (8) or element in the bead region,
wherein an electrically conductive component, an electrically conductive connection and an electrically conductive coating are one that has an electrical resistance of < 1 x 10⁸ ohms,
wherein the filaments (12a-12i) have been set on the inside of the sidewall (7) and the at least one electrically conductive component (8) or element in the bead region in such a way that the electrically conductive coating of the filaments (12a-12i) forms vulcanized electrically conductive passages both in the region of the interface between the sidewall (7) and the at least one electrically conductive component (8) or element in the bead region and in the region of the interface between the sidewall (7) and the tread base (10) in electrically conductive connection to the outer surface of the tread, **characterized in that**
the tread base (10) is overlapped on the outside by the sidewalls (7).

2. Pneumatic vehicle tyre according to Claim 1, **characterized in that** the electrically conductive passages originate from the electrically conductive coating of filaments (12a) which have each been set upright continuously over the inside of the sidewall (7') and in contact with the at least one electrically conductive component (8) or element in the bead region.

3. Pneumatic vehicle tyre according to Claim 1, **characterized in that** the electrically conductive passages originate from the coating of filaments which have been set on the carcass insert (3) at the radially outer end section of the sidewall (7'), at the radially inner end section of the sidewall and in contact with the at least one electrically conductive component (8) or element in the bead region, and in the region between the radially outer end section of the sidewall (7') and the radially inner end section of the sidewall.

4. Pneumatic vehicle tyre according to any of Claims 1 to 3, **characterized in that** the electrically conductive component (8) in the bead region is a rubber component, especially a flange profile.

5. Pneumatic vehicle tyre according to any of Claims 1 to 4, **characterized in that** the electrically conductive passages run at least essentially in radial direction.

6. Pneumatic vehicle tyre according to any of Claims 1 to 4, **characterized in that** the electrically conductive passages run at an angle to the radial direction of up to 60°.

7. Pneumatic vehicle tyre according to any of Claims 1 to 6, **characterized in that** the electrically conductive passages run at mutual distances of 5 cm to 15 cm.

8. Pneumatic vehicle tyre according to any of Claims 1 to 7, **characterized in that** the electrically conductive passages originate from the coating of filaments of a weave (13, 14).

9. Pneumatic vehicle tyre according to any of Claims 1 to 7, **characterized in that** the electrically conductive passages originate from the coating of filaments that have been set randomly with mutual contact.

10. Pneumatic vehicle tyre according to any of Claims 1 to 9, **characterized in that** the electrically conductive coating of the filaments comprises or consists of electrically conductive particles, for example carbon black particles, graphite particles or carbon nanotubes.

11. Pneumatic vehicle tyre according to any of Claims 1 to 10, **characterized in that** the electrically conductive coating of the filaments consists of an elastomeric material.

12. Pneumatic vehicle tyre according to Claim 11, **characterized in that** the coating is an adhesion promoter, preferably an RFL dip.

13. Pneumatic vehicle tyre according to any of Claims 1 to 12, **characterized in that** the filaments comprise electrically nonconductive carrier filaments which especially consist of rayon, polyester, polyamide or aramid.

## Revendications

1. Bandage pneumatique de véhicule en construction radiale comprenant une bande de roulement (1) qui possède un chapeau de bande de roulement (9) et une base de bande de roulement (10), une nappe de carcasse (3), des parois latérales (7) électriquement non conductrices et au moins un composant (8) ou un élément électriquement conducteur dans une zone de talon, lequel entre en contact avec une jante lorsque le pneumatique est monté sur celle-ci, la base de bande de roulement (10) étant électriquement conductrice et se trouvant en contact avec au moins un profilé central en carbone (11) qui est entremêlé avec le chapeau de bande de roulement (9), moyennant quoi la base de bande de roulement (10) se trouve en liaison électriquement conductrice avec la surface extérieure de la bande de roulement,
des fils (12a - 12i) pourvus d'un revêtement électriquement conducteur étant incorporés au moins dans une zone de paroi latérale, dont le revêtement forme des passages électriquement conducteurs entre la base de bande de roulement (10) et l'au moins un composant (8) ou un élément électriquement conducteur dans la zone de talon,
un composant électriquement conducteur, une liaison électriquement conductrice et un revêtement électriquement conducteur étant tels qu'ils présentent une résistance électrique inférieure à 1x10⁸ ohms,
les fils (12a - 12i) étant appliqués sur le côté intérieur de la paroi latérale (7) et l'au moins un composant (8) ou un élément électriquement conducteur dans la zone de talon de telle sorte que le revêtement électriquement conducteur des fils (12a - 12i) forme des passages électriquement conducteurs vulcanisés dans la masse à la fois dans la zone de la surface de séparation entre la paroi latérale (7) et l'au moins un composant (8) ou un élément électriquement conducteur dans la zone de talon et dans la zone de la surface de séparation entre la paroi latérale (7) et la base de bande de roulement (10) qui se trouve en liaison électriquement conductrice avec la surface extérieure de la bande de roulement, **caractérisé en ce que**
la base de bande de roulement (10) est recouverte par chevauchement du côté extérieur par les parois latérales (7) .

2. Bandage pneumatique de véhicule selon la revendication 1, **caractérisé en ce que** les passages électriquement conducteurs émanent du revêtement électriquement conducteur des fils (12a) qui ont été respectivement appliqués en continu sur le côté intérieur de la paroi latérale (7') et se trouvent en contact avec l'au moins un composant (8) ou un élément électriquement conducteur dans la zone de talon.

3. Bandage pneumatique de véhicule selon la revendication 1, **caractérisé en ce que** les passages électriquement conducteurs émanent du revêtement des fils qui ont été appliqués sur la portion d'extrémité radialement à l'extérieur de la paroi latérale (7'), sur la portion d'extrémité radialement à l'intérieur de la paroi latérale ainsi qu'en contact avec l'au moins un composant (8) ou un élément électriquement conducteur dans la zone de talon et dans la zone entre la portion d'extrémité radialement à l'extérieur de la paroi latérale (7') et la portion d'extrémité radialement à l'intérieur de la paroi latérale sur la nappe de carcasse (3) .

4. Bandage pneumatique de véhicule selon l'une des revendications 1 à 3, **caractérisé en ce que** le composant (8) électriquement conducteur dans la zone de talon est un composant en caoutchouc, notamment un profilé en cornet.

5. Bandage pneumatique de véhicule selon l'une des revendications 1 à 4, **caractérisé en ce que** les passages électriquement conducteurs suivent un tracé sensiblement dans la direction radiale.

6. Bandage pneumatique de véhicule selon l'une des revendications 1 à 4, **caractérisé en ce que** les passages électriquement conducteurs suivent un tracé selon un certain angle par rapport à la direction radiale, lequel est au maximum de 60°.

7. Bandage pneumatique de véhicule selon l'une des revendications 1 à 6, **caractérisé en ce que** les passages électriquement conducteurs suivent un tracé avec des écarts mutuels de 5 cm à 15 cm.

8. Bandage pneumatique de véhicule selon l'une des revendications 1 à 7, **caractérisé en ce que** les passages électriquement conducteurs émanent du revêtement des fils d'un tissu (13, 14).

9. Bandage pneumatique de véhicule selon l'une des revendications 1 à 7, **caractérisé en ce que** les passages électriquement conducteurs émanent du revêtement de fils qui ont été appliqués en couche emmêlée avec contact mutuel.

10. Bandage pneumatique de véhicule selon l'une des revendications 1 à 9, **caractérisé en ce que** le revêtement électriquement conducteur des fils contient des particules électriquement conductrices, par exemple des particules de suie, des particules de graphite ou des nanotubes de matière plastique, ou se compose de telles particules.

11. Bandage pneumatique de véhicule selon l'une des revendications 1 à 10, **caractérisé en ce que** le revêtement électriquement conducteur des fils se compose d'un matériau contenant de l'élastomère.

12. Bandage pneumatique de véhicule selon la revendication 11, **caractérisé en ce que** le revêtement est un agent adhésif, de préférence un enrobage de RFL.

13. Bandage pneumatique de véhicule selon l'une des revendications 1 à 12, **caractérisé en ce que** les fils possèdent des fils porteurs électriquement non conducteurs qui se composent notamment de rayonne, de polyester, de polyamide ou d'aramide.
